# EUROPEAN PATENT SPECIFICATION

(11) **EP 1 169 183 B1**
(45) Date of publication and mention of the grant of the patent: **17.09.2003**
(21) Application number: 98900879.2
(22) Date of filing: 21.01.1998
(51) Int. Cl.: B60B 3/16, F16B 39/10

(54) **VEHICLE WHEELNUT LOCKING DEVICE**
SICHERUNGSVORRICHTUNG FÜR RADMUTTER
DISPOSITIF DE BLOCAGE D'ECROU DE ROUE

(30) Priority: 21.01.1997 FI 970029 U
(43) Date of publication of application: 09.01.2002
(73) Proprietor: Laakkonen, Hannu, 75500 Nurmes (FI); Laakkonen, Martti, 75500 Nurmes (FI)
(72) Inventor: Laakkonen, Hannu, 75500 Nurmes (FI); Laakkonen, Martti, 75500 Nurmes (FI)
(74) Representative: Pitkänen, Hannu Alpo Antero
(86) International application number: FI9800047
(87) International publication number: WO98031554

(56) References cited:
- EP-A- 0 353 017
- GB-A- 2 229 241
- US-A- 3 741 603
- US-A- 4 737 057

## Description

The subject of the invention is a vehicle wheelnut locking device.

Vehicle wheels are usually attached by several wheelnuts to the hub. Whilst driving, these nuts can work loose and gradually unscrew themselves. In this situation, there is a danger that the wheel of the vehicle can detach itself. This can cause a serious accident. When a wheel comes off, the driver loses control of the vehicle and the vehicle and driver can be damaged or injured, and other road users are also endangered. In addition, the loose wheel can cause damage or a dangerous situation by coming off and travelling on its own at high speed. The loosening of wheelnuts and the possible loss of a wheel is a particularly serious problem with heavy commercial vehicles such as lorries, articulated lorries, and buses, where the wheels are large and heavy. Wheels coming loose from other types of vehicle can also cause an accident. Sometimes an accident can also be caused by the wheelnut coming away from the wheel.

A wheelnut locking device according to the preamble of claim 1 is disclosed in EP 353 017 A. A pair of resilient steel strips prevent the nut from unscrewing.

The purpose of this invention is to introduce a vehicle wheelnut locking device which removes the aforementioned problems. In particular, the purpose of this invention is to introduce a vehicle wheelnut locking device with which the nuts on the wheel can be reliably and safely locked in position and prevented from unscrewing. In particular, the purpose of this invention is to introduce a locking device that has a simple construction, is easy to use and can be economically produced.

The purpose of the invention is achieved with a vehicle wheelnut locking device that possesses the characteristics presented in the appended claim.

The locking device according to the invention comprises a body with two or more holes formed in it, which are some distance apart from each other, which are fitted over the wheelnuts of the wheel to prevent them from rotating. When the locking device is fitted over the wheelnuts, it extends between at least two wheelnuts, from one nut to the other. When the holes press against the surfaces of the nuts, the nuts cannot rotate since the locking device locks them in position. In this way the nuts are locked reliably and securely in position. The construction is simple and economic to produce. The locking device can be removed when removing the wheel, or for any other reason, and replaced a number of times.

The body according to the invention comprises advantageously two or more locking parts in which holes are formed and one or more centre sections between the locking parts. This kind of construction is functional and can be easily put in place and removed.

The locking device according to the invention is economically manufactured at least partly from flexible material, such as rubber or other material suitable for the purpose. This kind of flexible material stretches in use and when put in position, which extends its useful life. In addition, it effectively grips the nuts, locking them so that the nuts cannot freely rotate.

In the following, the invention is explained in more detail with reference to the attached illustrations, in which:
figure 1 shows an arrangement of the vehicle wheelnut locking device according to the invention, viewed from the side, and a nut locked in one of the holes, and
figure 2 shows a side view of a vehicle wheel which is fitted with a number of locking devices.

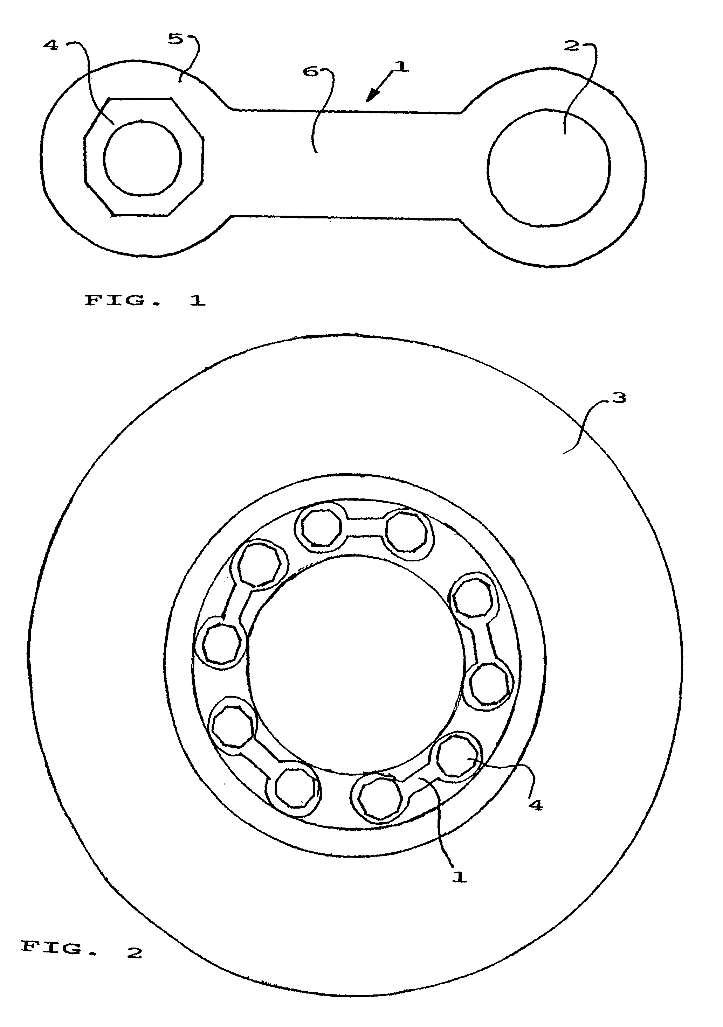

The locking device according to the arrangement shown in figure 1 comprises a plate or wedge type body 1, which includes two locking parts 5 and their centre section 6. There are holes 2 in the locking parts whose diameters are slightly smaller than the diameter of the wheelnuts on the vehicle wheel. In this arrangement the holes are mainly round. The distance between the holes 2 corresponds to the distance between the nuts. The locking device is manufactured from a flexible material and in this arrangement the material is rubber, which has been reinforced with fabric material. Other flexible materials suitable for the purpose may also be used in various arrangements of the invention.

The locking devices according to figure 2 are positioned around the nuts 4 of the vehicle wheel 3 by placing them so that the holes of one locking device are over two adjacent nuts and then pressing the locking parts so that the holes slide down around the nuts. When the diameter of the holes is slightly smaller than the diameter of the nuts, the nuts are unable to rotate. The locking devices can be removed, for example, by pulling the centre section and the locking parts away from the wheel, then they come away relatively easily. Since the locking devices are made from flexible material, they can be reused several times.

In other arrangements of the invention, locking devices can be used in which there are more than two holes and more than one centre section. Also in these arrangements the holes are the same distance apart as the distance between the nuts, and by locking it you can lock as many nuts as there are holes in the locking device. It is also possible to manufacture locking devices which, instead of locking adjacent nuts, can be used to lock, for example, opposite nuts in place.

The invention is not limited to the advantageous arrangements shown but can vary within the framework of the invention concept formed by the claims.

## Claims

1. A vehicle wheelnut locking device, which comprises a body (1) comprising two or more locking parts (5), in which are formed holes (2), and one or more centre sections (6) between the locking parts, which holes (2) are positioned around the nuts (4) of a wheel (3) to prevent them rotating, **characterised in that** the locking device is manufactured, at least partly, from flexible material, **characterised in that** the material is a material that stretches in use, such as rubber.

## Patentansprüche

1. Eine Verriegelungsvorrichtung für den Radmutter eines Fahrzeuges, die aus einem Rahmen (1) mit zwei oder mehreren Verriegelungsteilen (5) besteht, in den Löcher (2) gebildet worden sind sowie eine oder mehrere Zentersektionen (6) zwischen den Verriegelungsteilen, welche Löcher (2) rund um die Mutter (4) des Rades (3) um die herumzudrehen zu verhindern placiert worden sind, **dadurch gekennzeichnet, dass** die Verriegelungsvorrichtung, wenigstens teilweise, aus flexiblem Material hergestellt worden ist, **dadurch gekennzeichnet, dass** das Material ein Material ist, dass sich aus im Gebrauch dehnt, wie beispielsweise Gummi.

## Revendications

1. Un dispositif de blocage de l'écrou d'une roue de véhicule qui comporte un corps (1) comprenant deux ou plusieurs pièces de blocage (5) munies d'ouvertures (2) et d'une ou de plusieurs parties centrales (6) entre les pièces de blocage, lesquelles ouvertures (2) sont positionnées autour des écrous (4) d'une roue (3) afin de les empêcher de tourner, **caractérisé en ce que** le dispositif de blocage est fabriqué, au moins partiellement, en un matériau flexible, **caractérisé en ce que** le matériau est une matière qu'il s'allonge à l'usage, telle que le caoutchouc.
